(19) Europäisches Patentamt

European Patent Office

Office européen des brevets

(11) EP 1 693 978 A2

(12) EUROPEAN PATENT APPLICATION

(43) Date of publication:
23.08.2006 Bulletin 2006/34

(51) Int Cl.:
H04B 17/00 (2006.01)    H04B 7/08 (2006.01)
H04B 7/12 (2006.01)

(21) Application number: 06250902.1

(22) Date of filing: 21.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 21.02.2005  GB 0503544

(71) Applicant: BRITISH BROADCASTING
CORPORATION
Tadworth, Surrey KT20 6NP (GB)

(72) Inventor: Elliott, John Edward,
British Broadcasting Corp.
Tadworth,
Surrey KT20 6NP (GB)

(74) Representative: Reeve, Nicholas Edward
Reddie & Grose
16 Theobalds Road
London WC1X 8PL (GB)

(54) **Signal meter for digital systems**

(57) A Signal Strength Indicator for Digital Systems is disclosed. The Indicator is based on the output of the correlation operation performed in the synchroniser of a digital receiver. In particular, the correlator output indicating the position and timing of the guard intervals in the digital signal, is used as a measure of signal strength. Indicator means, such as a numerical display, graphical display, or indicator light, give an indication of the signal strength to the user. Various techniques are employed to improve the accuracy of the signal strength indication, such as discerning between a digital signal and noise or other kind of signal. Thus, the invention has application to the Digital Radio Mondiale (DRM) system.

Figure 2

EP 1 693 978 A2

## Description

This invention relates to a signal meter for digital broadcast systems, and in particular to a digital broadcast receiver in the Digital Radio Mondiale (DRM) radio broadcast system comprising such a meter.

DRM is a digital radio transmission system that employs AM broadcasting bands for signal transmission, while providing near FM quality sound. In analogue transmission systems, there is a natural feedback mechanism to assist in the positioning of a radio receiver to ensure the best signal reception. Quite simply, the user can listen to the audio signal and alter the position of the receiver or antenna until the reception is satisfactory. In a digital transmission system however, such as OFDM, COFDM, or DRM in particular, this method of adjustment is no longer possible. The digital signal is either strong enough to give quasi error free reception and the receiver operates satisfactorily, or there are too many received errors and nothing can be heard at all. There is also a limited region between the two cases where the signal strength can be thought of as being on the edge of a "digital cliff" and errors in the audio will be heard. In digital systems, there is also a delay between an adjustment being made to the antenna or receiver position and this being reflected in the audio output as a result of the necessary digital processing taking place in the receiver.

We have therefore appreciated that it is desirable to provide a reliable, quickly responsive indicator of signal strength in a digital transmission receiver.

A known receiver, the DRM2010, presents an eight segment bar display as an indicator of signal strength based on the Modulation Error Ratio of the received signal. The MER is a measure of the difference between the constellation of the received digital signal and that of the originally encoded signal and can therefore be thought of as a signal to noise ratio. In any COFDM receiver the aim is to maximize the MER.

However, there are two fundamental problems with using the MER. Firstly, it is derived from the constellation and this is available only after the Fast Fourier Transform (FFT) and channel equalisation has been carried out. The channel equaliser uses a filter to interpolate between pilot signals from one signal symbol to the next, in order to compensate for noise, propagation effects of the channel and imperfections in the receiver itself. The pilot signals are transmitted in addition to the information part of the signal to make this possible. However, the result is a few symbols delay following a change in the input signal to an effect being visible in the MER value.

Secondly, the receiver must have achieved time and frequency synchronisation before the MER can be calculated. In certain circumstances, such as when a co-channel interferer is present, the receiver may not in fact be able to synchronise, but some adjustment of the antenna or receiver position may still give a satisfactory signal either because the adjustment results in more of the desired signal, or alternatively, less of the unwanted interferer. In such a case, we have appreciated that means of indicating the quality of the signal before synchronisation and with a fast response time is desirable. A fast response time in the indicator is essential, as it has been found difficult for a user to use an indicator if there is a delay of more than about 200ms between making an adjustment and the correct value being displayed.

An alternative method of assessing the signal quality in a digital receiver is based on calculating the Bit Error Rate (BER). This is a ratio of the total number of bits receiver in error to the total number of bits received. One way of calculating the BER is to transmit a known data sequence, typically a pseudo random binary sequence, and detect how many errors are found in the pseudo random binary sequence received at the receiver. This technique however takes some useful data capacity from the main service, and is not therefore really practicable in DRM systems as bit-rate is very limited. A second method is to re-encode the received data and compare it with the received data. This requires extra processing and memory neither of which are desirable if affordable battery powered receivers are to be realised.

## Summary of the Invention

The invention is defined in the independent claims to which reference should now be made. Advantageous features are set forth in the dependent claims.

## Brief Description of the Drawings

Preferred embodiments of the invention will now be described by way of example and with reference to the drawings in which:

Figure 1 schematically illustrates the composition of a signal in a COFDM transmission system;

Figure 2 schematically illustrates apparatus according to a first preferred embodiment of the invention;

Figure 3 is a graph illustrating the output of the smoother circuit shown in Figure 2;

Figure 4 is a graph illustrating a noise spectrum;

Figure 5 is a graph illustrating the likely output of the smoother circuit in the presence of a multipath signal;

Figure 6 is a graph illustrating the treatment of multipath signals;

Figure 7 is a schematic illustration of a fully digital front end of a receiver in a second preferred embodiment of the invention;

Figure 8 is a schematic illustration of an antenna diversity receiver according to the third embodiment of the invention; and

Figure 9 is a graph illustrating the function used to process signal strength in a diversity receiver.

## Detailed Description of the Preferred Embodiments

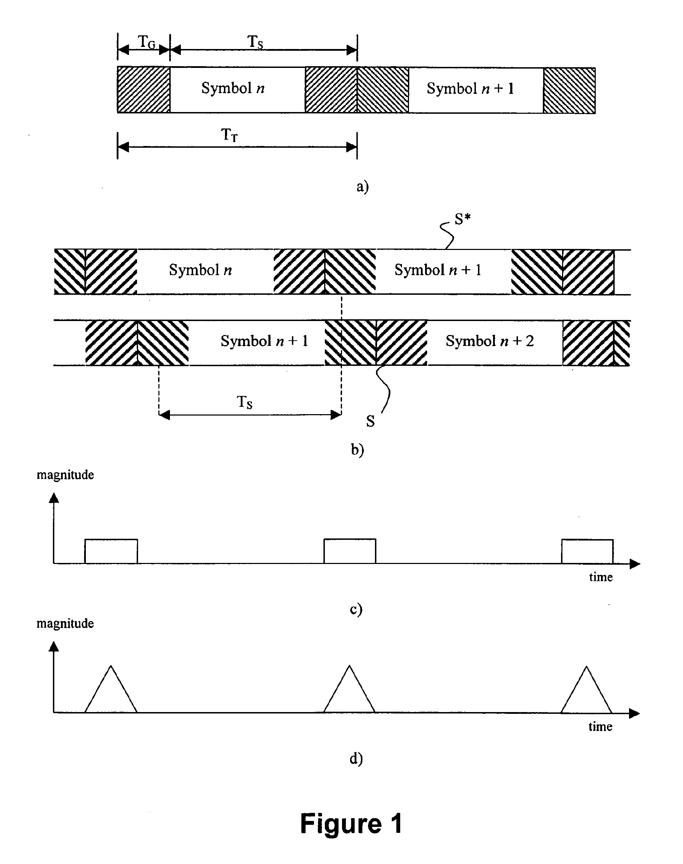

The preferred embodiment of the invention is a signal meter for use in digital systems employing COFDM, or COFDM like, signals. In particular. The signal meter relies on the properties of a COFDM signal in order to operate. A typical COFDM signal will therefore now be described in connection with Figure 1.

A COFDM signal is made up of symbols of data, two such symbols being shown in figure 1a, and having length $T_T$. At the start of each symbol, is a region known as the guard interval. This allows the COFDM system to deal with the effects of multipath, that is the phenomenon of identical signals being received with slight delays along different air transmission paths. The guard interval is formed by taking $T_G$ of the end portion of the symbol, and copying it so that it also appears at the front. The length of $T_G$ is dependent on the transmission mode being used in the COFDM system. Thus, the symbol has a useful symbol period of only $T_U = T_T - T_G$. Typically one of four possible transmission modes is used, having guard interval sizes of 1/9, 1/4, 4/11 and 11/14 and one task of the COFDM receiver is to detect which mode of operation has been used for the signal. For each mode of transmission, the lengths of the total symbol period, the guard interval and the useful symbol period may differ.

Identifying which mode has been used is achieved in the receiver by correlating the COFDM data received with a version of itself delayed by the useful symbol period. As the useful symbol period will be different in each mode, COFDM receivers employ a process in which the different useful symbol periods for each mode are tried in parallel.

As can be understood from Figure 1b), when the correct useful symbol period is chosen, the guard interval in the delayed signal is received at the same time as the end of the symbol in the undelayed signal from which the guard interval data was originally taken. As a result, correlating the delayed and the undelayed or ordinary signals results in a peak appearing periodically at the guard interval overlap for each symbol, with the rest of the signal having an average value of zero. This is shown in Figure 1 c). It will be appreciated that, if the correct useful symbol period is not chosen, then some overlap of the guard interval with the identical part of the end of the symbol will occur, but only occasionally and not for every symbol period. Thus, by integrating the output of the correlator and selecting the delay which gives the maximum output value, the transmission mode can be deduced. The integration is usually performed by means of a top hat integrator, giving an output schematically shown in Figure 1d). Once the transmission mode has been identified, the useful symbol must be located and presented to a Fourier Transform circuit for decoding.

We have appreciated that the correlation function employed in COFDM receivers can be utilised to give a reliable, responsive signal strength indicator, as explained below.

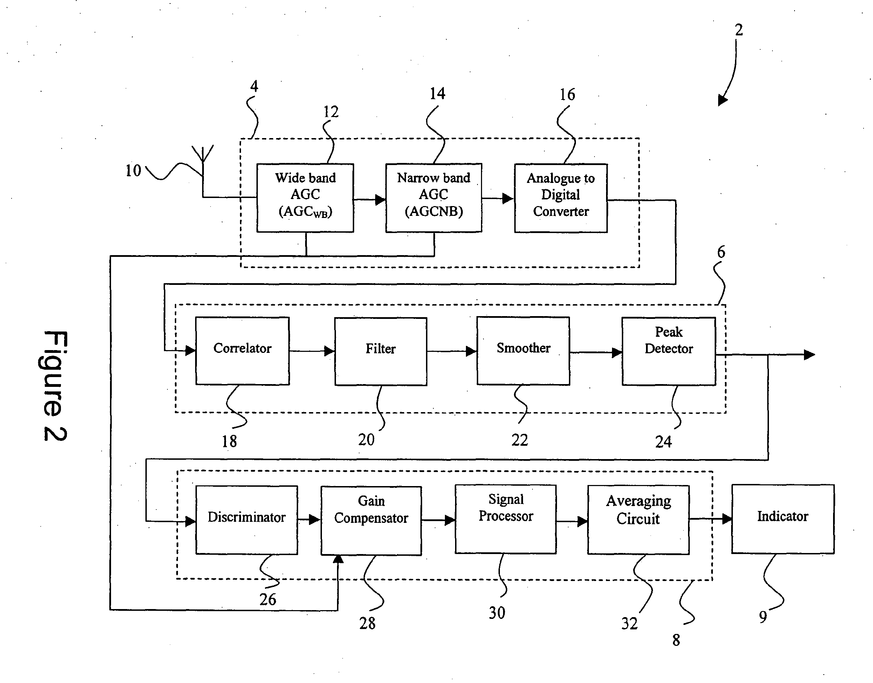

Reference will now be made to Figure 2, which shows a schematic illustration of the first preferred embodiment of the invention. The first preferred embodiment comprises a COFDM receiver 2 having a front end 4, and synchroniser 6 connected before the decoding circuits of the receiver (not shown). The synchroniser 6 provides an output to a decoder circuit (not shown), as well as to a signal meter 8. The signal meter subsequently gives an output to indicator 9. The signal meter comprises a number of processing blocks, which will be described in more detail later. The indicator 9 is a physical indicator device such as a bar display, an indicator light, or numerical readout, which can be mounted on the exterior of a receiver to display to a user the received signal strength. Only one synchroniser chain is shown in Figure 2, for clarity, but it will be appreciated that one synchroniser chain is provided for each possible transmission mode that is to be detected.

The front end comprises an antenna 10, wideband and narrow band Automatic Gain Control Circuits (AGCs) 12 and 14, and Analogue to Digital Converter (ADC) 16. Needless to say, the front end of a real receiver would have many more components to receive the analogue signal, shape the signal, and convert it to the digital domain before passing it to later processing blocks. For the sake of simplifying the description however, only the salient blocks have been included.

The front end shown in Figure 2 corresponds to a hypothetical heterodyne receiver having several stages. The actual architecture will vary from one receiver to another, but essentially is always likely to have the two AGC controls shown. The first of these 12 controls the gain of the signal after some initial channel filtering. The signal at this point is still wideband (WB), of the order of a few MHZ, and the AGC is therefore referred to as $AGC_{WB}$. The second AGC 14 controls the gain after a 10kHz narrow band (NB) filter, and is referred to as the $AGC_{NB}$. The narrow band filter isolates the signal of interest from that received by the antenna. The AGCs 12 and 14 ensure that a signal with a relatively constant Root Mean Square voltage is presented to ADC 16. The ADC converts the analogue signal received at the antenna to a digital signal for decoding.

Thus, a digital signal COFDM is received at the Synchroniser 6 and passed to correlator block 18. The correlator block delays the received signal by each of the four possible useful symbol periods and correlates the delayed and non-delayed signals with each other to result in a signal like that shown in Figure 1c. In practice, the COFDM signal is complex, and the correlation is performed merely by multiplying the non-delayed signal with its delayed complex conjugate.

The output of the correlator is then input into a low pass filter 20, and a top hat integrator, referred to as a smoother 22. This removes some noise and helps to make the portion of the symbol corresponding to the guard interval easier to identify. Lastly, a peak detector 24 receives the output of the smoother, and outputs two values, namely the magnitude and relative position of the largest value in the smoother waveform. The position can be given in terms of the sample number having the highest value, and may therefore be understood to indicate a difference in timing, or the relative timing between the delayed and undelayed signals.

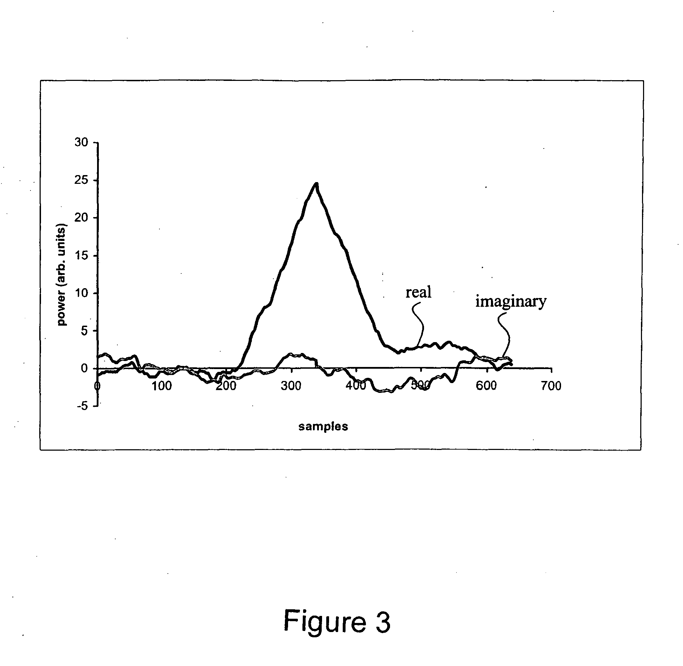

The output waveform of the smoother for a single path channel after synchronisation is illustrated in Figure 3. It has a characteristic triangular shape, with the width of the base of the triangle being equal to $2T_G$. The output of the smoother is used for transmission mode detection. Specifically, the synchroniser containing the smoother which constantly outputs the peak of maximum height, therefore indicating the best correlation of delayed and non-delayed signals, is deemed to be applying the correct delay, and therefore indicating the appropriate transmission mode.

We have appreciated that as the input data to the correlator is proportional to a voltage, and the correlator is a complex multiplier, the output of the correlator is proportional to the power of the signal. In particular, the stronger the COFDM signal, then the larger the amplitude of the waveform from the smoother. The preferred embodiments therefore use this feature of the synchroniser as a signal strength meter, subject to some additional processing.

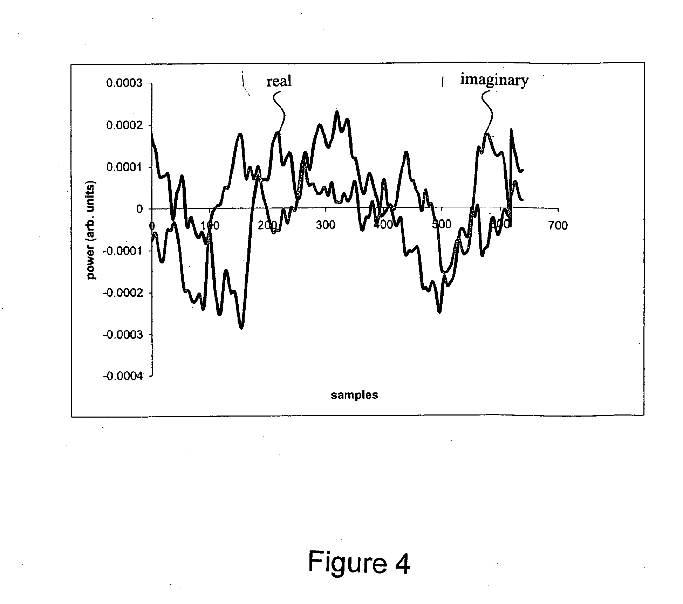

The output from the peak detector is first passed to a discriminator circuit 26 of signal strength indicator 8. The purpose of the discriminator is to distinguish between COFDM signals and other signals or noise, and only give an output when a COFDM signal is present. The need for this will be apparent when referring to Figure 4, which shows the smoother waveform when noise is used as input data, although the input data could equally well be an AM signal or other non COFDM signal. Inevitably, there will always be a peak somewhere in the waveform, and this could be mistaken for the peak produced by the guard interval overlap of COFDM. In the case of a COFDM signal however, the peak will always be more or less in the same position for each symbol. The actual position will change because of variations within the signal channel, and may have a slow drift in time due to an initial timing error. It should not however vary too much between successive symbols, and should therefore always remain within about a guard interval of the position of the previous signal.

Thus, the discriminator in the preferred embodiment is set to provide a zero output, to discount the maximum value detected, if a detected peak does not lie within one guard interval To of the previous peak for the relevant transmission mode (that which is being searched for by the synchroniser). In doing so, spurious indications of signal strength in cases where no COFDM signal is being received can be avoided. In order to achieve this, the positions of the peaks are detected from the waveform output from the peak detector. The relative difference in position of the peaks on the waveform can be easily calculated by comparison of the peak value positions output by the peak detector for successive symbols. It will be further appreciated that the difference in the position values of the peaks corresponds to a difference in relative timing of the receipt of the peak in the delayed and undelayed signals. Although, a guard interval is preferably used as the discriminator condition, the interval could be made smaller. A smaller interval would improve the operation of the discriminator, providing successive guard interval peaks could still be detected.

Additionally, discrimination can also be provided by monitoring the operation of the synchroniser. As noted above, when the transmission mode has not been identified, the four synchronisers will operate in parallel performing correlation and peak detection. When a COFDM signal is present, one synchroniser chain will consistently give the best output, always identifying the greatest peak. When no COFDM signal is present however, no coherent signal feature is available to produce the peak, and the synchroniser chain giving the best output will vary from one symbol to the next. The discriminator is therefore arranged to monitor whether or not, the synchroniser giving the best output for mode transmission is static or changing. If it is changing, then the discriminator again gives no output.

Additionally, we have found that the peak detector when a COFDM signal is being received is typically greater than the detected peaks resulting from noise effects or AM signals alone. Preferably, therefore the discriminator is set to ignore peaks that have a value below a particular threshold. What value to set as a threshold is readily determined by experiment, and depends on the type of signal, any AGC applied in the front end, the set up of the synchronisers, and so on.

It will be appreciated that the Automatic Gain Control circuits in the front end of the receiver, whose role is to ensure that the signal at the input to the ADC has a reasonably constant RMS voltage over some time period, will also have an effect on the output of the peak detector.

The wideband $AGC_{WB}$ 12 will respond to the strength of the entire signal received at the antenna. The COFDM signal of interest however, will be just one part of this, and variations in the COFDM signal will therefore have little effect on the $AGC_{WB}$ setting.

In cases where a COFDM signal is being received without any co-channel interferers or noise, variations in the propagation channel or as the antenna is moved by a user, will cause the received signal to vary in strength. The $AGC_{NB}$ 12, assuming it is tracking the COFDM signal well, tracks these changes and presents a relatively constant average voltage to the ADC 16.

As a result of this, the peak value detected in the peak detector would be constant if the value of at least the gain applied by the $AGC_{NB}$ was not compensated for. Thus, the signal from the discriminator is then passed to gain compensator circuit 28. The gain compensator circuit 28 receives inputs from $AGC_{WB}$ and $AGC_{NB}$, indicating the gain setting of the respective AGCs. The gain values applied are then divided from the peak value output by the peak detector to produce a corrected value.

$$\textit{Corrected Signal Value} = \frac{\textit{Peak Detector Output}}{AGC_{WB} \cdot AGC_{NB}}$$

Compensating the signal in this way also allows the signal meter to compensate for co-channel interferers. For example, in the case where there is a co-channel AM station interfering with the desired DRM signal, then movement of the antenna may reduce the received power of the AM signal and increase the DRM signal by the same amount. The $AGC_{NB}$ would remain the same, but the output from the peak detector would increase as more useful DRM signal is received. As a result the corrected signal strength increases, and the signal strength indicator shows that the antenna is being moved in the right direction.

Alternatively, in cases where the movement of the antenna decreases the interferer and also the wanted DRM signal, then the total received power decreases and the $AGC_{NB}$ increases accordingly. As a result, the corrected signal strength also decreases indicating that the antenna is being moved the wrong way.

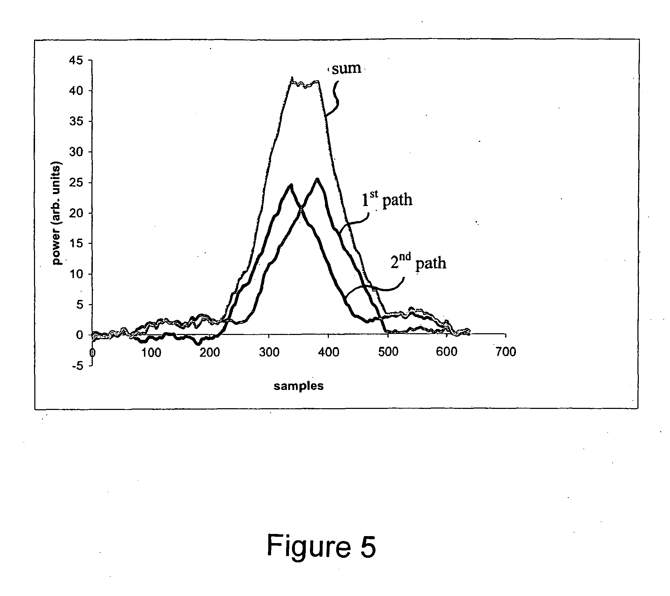

Following the compensator 28, the signal is passed to a signal processor 30. The signal processor allows the receiver to compensate for the effect of multipath signals. In a multipath environment, the same signal may travel along two or more different paths to arrive at the receiver, usually with a difference in timing and signal strength. If there is a second path, this will appear in the output of the smoother as a second peak superimposed on that of the first. This is illustrated in Figure 5 to which reference should now be made.

As can be seen in Figure 5, the smoother outputs the sum of the two waveforms resulting in an increased peak value and an increased apparent signal strength. Destructive interference between such signals can also cause nulls in some carriers and result in some carriers being erased altogether. Although, the Forward Error Correction applied to the signal allows some of these problems to be dealt with, if too many carriers are erased for a particular code rate, then the receiver will fail.

Multipath signals can be advantageous providing they are received within a guard interval of each other. In this case, although nulls are formed in the signal, they are typically sufficiently far apart to be dealt with by the Forward Error correction and the code rate. The overall effect therefore is then mostly one of constructive interference, and more paths mean more power of useful signal. This is the case shown in Figure 5.

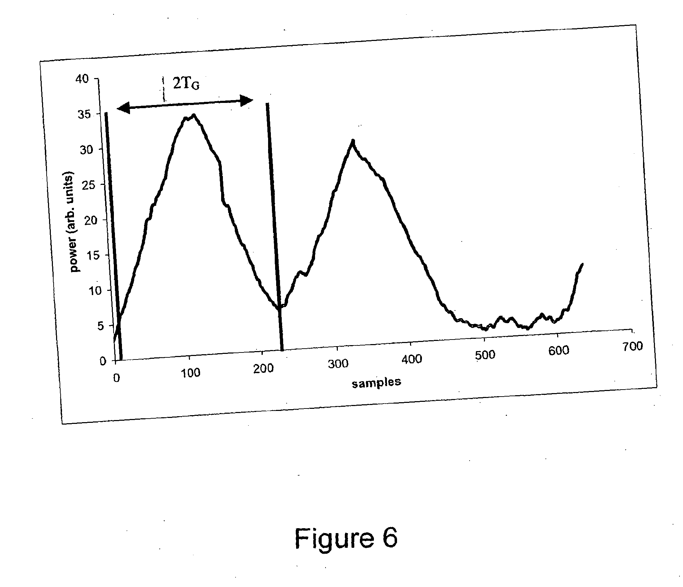

However, if the multipath signals are received more than a guard interval apart, as shown in Figure 6, then they will give rise to closely spaced nulls and intersymbol interference (ISI).

It is therefore important to reflect these problems, in the signal strength presented to the user. The signal processor, is therefore arranged to define a window of twice the guard interval width around the peak detected by the peak detector, and to search for paths that are falling outside this window. If a secondary peak is found, outside of the window around the main peak, then a multipath signal may have been detected that could cause interference or nulls in the main signal. The value and position of the secondary peak is then used to reduce the value of the peak detected by the peak detector to reflect a lowered confidence.

In the simplest implementation, the height value of the secondary peak could be subtracted from the height value of the main identified peak to give a corrected value. The second peak will however cause more damage to the main signal, the closer it is to the edge of the window, and it is therefore preferable to reflect the position of the peak as a factor in the subtraction. If $W_x$ and $S_x$ represent the x position of the edge of the window, and of the secondary peak respectively, and $P_M$ and $P_S$ represent the height value of the main and secondary peak respectively, then preferably the value of the main peak is backed off as follows:

$$Corrected\ P_M = P_M - P_S \cdot e^{\wedge}(W_X - S_X)$$

where $S_x > W_x$. Alternatively, other expressions could be used as would be apparent to those skilled in the art. Such as

$$Corrected\ P_M = P_M - P_S \cdot 1 / 1 + (W_X - S_X)^{\wedge}2$$

The signal from the discriminator is then passed to averaging circuit 30. The peak value indicated by the peak detector will vary from COFDM symbol to symbol as the channel will not be static. It has therefore been found desirable to provide a small amount of averaging, so that a more constant reading can be given. The averager has a buffer in which a number of values are simultaneously stored for averaging. A sliding average based on the output of five symbols was chosen, as it was found to smooth out large fluctuations without significantly slowing down the response time of the indicator.

The averager is preferably arranged only to accept non-zero values. This means that the false positives described above for noise or non COFDM signals will not be counted towards the signal strength, and will additionally not result in a lower apparent signal strength by lowering the average.

Despite the steps described above, false positives can occur from non COFDM signals when two peaks are detected within a guard interval of one another. For this reason, the averager is preferably additionally arranged to discount all of the values in the buffer that have been stored for averaging, once a zero value is received. For example, it has been found that false positives caused by noise or AM signals tend to appear in bursts. Thus if the averager is configured to take a sliding average of five values, it is possible that five false positives will be received and contribute to the indication of signal strength. If a noise signal or AM signal is present however, a zero value will eventually be received, because the signals have no inherent consistent periodic component. The AM signal does have a periodic component, namely the carrier signal, but this does not repeat in the way that the synchronisers are arranged to detect, and will at times appear partly synchronised, leading to false positives, and at others not synchronised at all. On receipt of the zero value, clearing the buffer means that those false positives will not contribute towards the result of any later averaging. Increasing the size of the buffer, and therefore the number of values in the sliding average therefore reduces the likelihood of taking false positives into account.

In practice, using a sliding average of five values with a noise like input, such as that of an empty channel, was found to result in 28 false positives for about every 1000 symbols. This assumes that the buffer is cleared every time a zero value is received. Increasing the sliding average to ten, reduced the false positives to zero. With an AM signal however, about 125 false positives were received for every 1000 symbols when using a sliding average of five values, and 6 false positives when using a sliding average of 10 values.

The averager therefore outputs a signal which is indicative of the signal strength of the received digital signal. This is then passed to an indicator 34 for display to a user.

In the first preferred embodiment of the invention, a superheterodyne front-end was employed. A second embodiment utilising a fully digital front end will now be described.

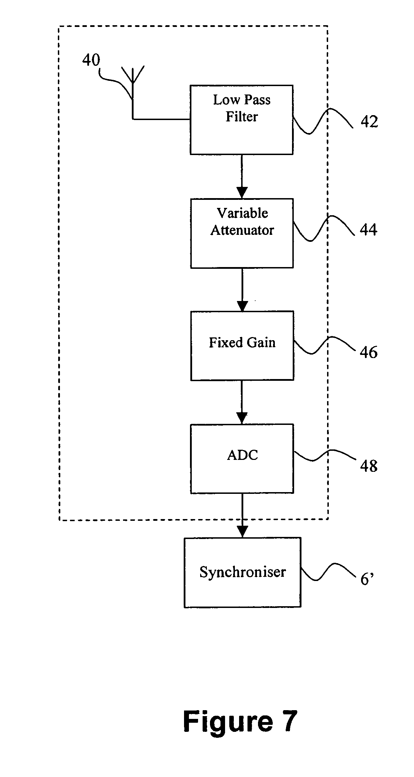

The set up is nearly identical to the first embodiment, only the front end circuitry 4 is represented by the digital front end illustrated in Figure 7.

An analogue signal is first received at antenna 40, and is low pass filtered in the LPF filter block 42. The filtered signal is then passed to a variable attenuator 44, to a fixed gain element 46, Analogue to Digital Converter (ADC) 48, and subsequently to the rest of the receiver, including synchroniser 6'.

The purpose of the attenuator is the same as the AGC described in the first embodiment. It prevents clipping and maximises the signal going into the ADC. In the digital front end however, the signal being input into the ADC is not a 10kHZ channel but the whole SW/MW/LW band. The signal of interest is therefore just one of many hundreds, and any variation in the amplitude of the COFDM signal of interest will have a negligible effect on the signal going into the ADC. The attenuation setting will not change significantly, and can be thought of as equivalent to the $AGC_{wB}$ described earlier.

The correction applied by the discriminator in this case is therefore:

$$Corrected\ Signal\ Value = Peak\ Detect\ Value \times Attenuator\ Setting$$

The Attenuator Setting will be more or less constant, but the uncorrected Peak Detect Value will vary over a wide range. This requires a floating point implementation to deal with the range of values likely to be encountered, or some digital AGC within the digital processing to prevent clipping.

A third preferred embodiment will now be described in which diversity reception techniques are used.

Diversity reception has been shown to increase the reception reliability of COFDM and DRM receivers significantly. Two forms will now be considered namely antenna diversity and frequency diversity. In both cases, the goal is to maximise the wanted to unwanted power ratio.

In antenna diversity systems, two antennas are used to receive two separate signals with the same information content. Two demodulators, each with an associated FFT time synchronisation process, are then employed in the receiver to decode and combine the two signals. In antenna diversity receivers, the biggest gain seems to come from polarisation diversity. In this arrangement, the antennas are usually fixed at right angles to each other. For the purposes of antenna adjustment, we can think of these two antennas as a single antenna.

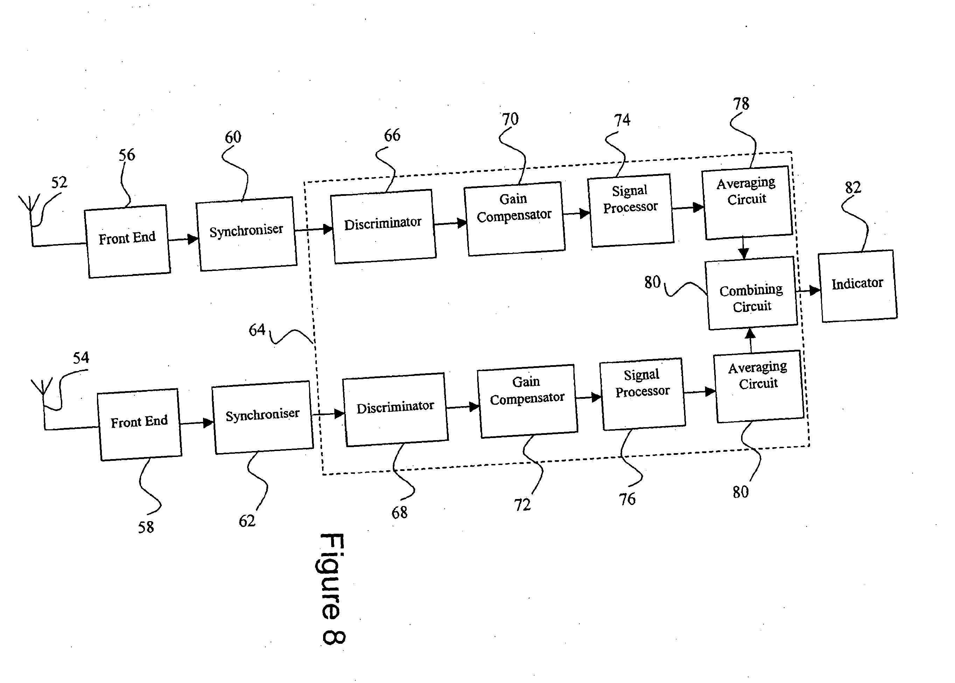

An antenna diversity receiver is shown in Figure 8 to which reference should now be made. The arrangement is essentially like two receivers shown in Figure 1, having two antennas 52 and 54, each connected to a respective front end 56 and 58, synchronisers 60 and 62, coupled to a single meter 64. The signal strength indictor comprises a discriminator 66 and 68, a gain compensator 70 and 72, a signal processor 72 and 74 and an averager 76 and 78 for each antenna. The results of the two averaging circuits 76 and 78 are then passed to combining circuit 80, before being passed to indicator display 82. The results are then displayed on an indicator section on the radio, such as a bar display, a light, or a numerical readout.

The operation of the combining circuit involves more than a simple sum of the values from the two averaging circuits as will appreciated from the discussion below.

Diversity reception works best if each demodulator has some signal to process, such that when one signal fails the receiver is still able to continue working with the second demodulator. Therefore, it is advantageous to arrange for each demodulator to receive a similar signal power, when the long-term variations of the channel have been averaged out over time. In particular, the situation to be avoided is that in which a strong signal is going into one demodulator and almost no signal going into the other. If the strong signal failed in this instance, then the receiver would cease to work.

For this reason, the output from the two averaging circuits cannot just be added together. It is possible for example to imagine that movement of the antenna in a particular direction causes the signal going into the first demodulator to increase, and the signal going into the second demodulator to decrease by the same amount. A simple addition of the two outputs in this case would give a constant value, but would not indicate the situation where the receiver is vulnerable if one of the signals was to fail.

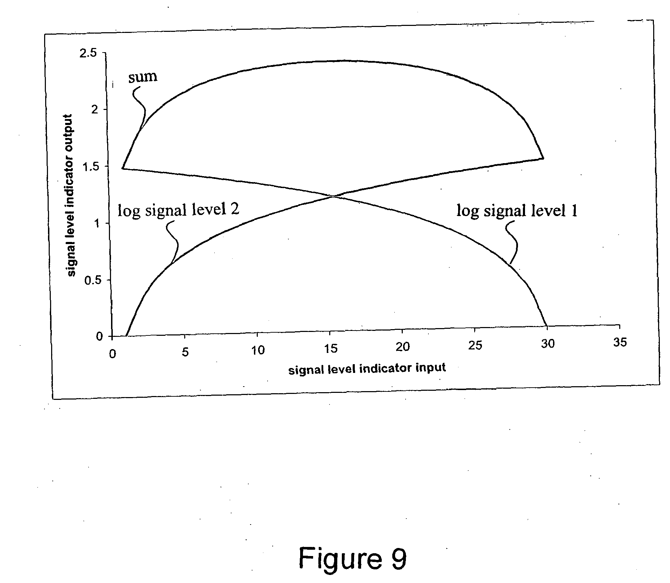

The combining circuit 80 therefore takes a log of each value output from the averager circuits before adding them together. In this way, the optimum condition is indicated when approximately the same signal strength is going into both of the receivers. This can be understood more easily with reference to Figure 9, which shows a graph of the logs of the values output from the averagers, as well as the sum of the logged values. The x-axis shows the power being increased in one demodulator at the expense of the other. The graph for the sum shows a plateau where each demodulator is receiving similar power. The value of the graph for the sum is then used as the basis for the output to the display indicator.

In frequency diversity, there is only a single antenna, and the signal is sent on two different carriers. Only one antenna is therefore needed at the front end, and from the point of view of a user, the receiver may look entirely ordinary, inside the receiver however the two separate signal frequencies are identified and then processed in the same way as described above for the antenna diversity case.

Although the signal indicator is capable of indicating signal strength for any COFDM receiver, it is intended primarily for use with DRM radios where it can present signal strength quickly and reliably to the user of the radio in a way that allows the user to adjust the antenna position and achieve good reception. The signal indicator described could for example be used when scanning the AM bands looking for DRM signals. The AM bands are 30MHz wide, with channels of 9 and 10kHZ width. Taking into account the necessary frequency spacing between channels, means that there are approximately 2000 channels to search for a signal, although not all of these are used for commercial broadcasting.

The signal meter described has a low latency, it can reliably be used to determine whether a channel contains a DRM transmission within a few tens of symbols. This makes it ideal for use in an automatic tuning process. A controller could for example, cause the DRM to sequentially scan through each of the available channels and monitor the signal meter. If the value of the signal meter is above a pre-determined threshold, indicating that a DRM signal is present, then the controller can request the receiver to linger, and decode the Fast Access Channel (FAC) and Service Description Channel (SDC) to get the service label and additional service information for storage in the receiver's memory. If no DRM signal is deemed to be present, then the receiver can move onto the next channel, and continue the searching process.

Although the preferred embodiments have been described in terms of hardware circuits that perform the various processing steps, it will be appreciated that the invention could also be implemented in software, using a combination of software and hardware components where appropriate.

**Claims**

1.  A digital receiver, for receiving a digital signal having symbols comprising a useful symbol part, and a guard interval, the receiver comprising:

    a front end for receiving a signal;
    a synchroniser coupled to the front end, for correlating the received signal with a delayed version of itself to give an output indicating the presence of the guard intervals, and the timing of the signal symbols;
    a signal meter coupled to the synchroniser, wherein the signal meter is arranged to give a measure of signal strength based on the output of the synchroniser;
    an indicator to give a representation of the signal strength based on the measure of signal strength produced by the signal meter.

2.  The digital receiver of claim 1, wherein the synchroniser comprises:

    a correlator for correlating the received signal with a delayed version of itself to give an output;
    an integrator for integrating the output from the correlator to output a waveform representative of the power of the received signal; and
    a peak detector for outputting the maximum value of the waveform to the signal meter, wherein the measure of the signal strength is based on the maximum value output.

3.  The digital receiver according of claim 2, wherein the peak detector is arranged to detect the maximum value of the waveform for each symbol in the signal and the relative position of the maximum value within the waveform; and wherein the signal meter comprises a discriminator arranged to detect whether the relative position of the maximum value for a symbol, and that of the maximum value output by the peak detector for the preceding symbol differ by more than a predetermined amount, and wherein when they do, the signal meter is arranged to disregard the maximum value for the measure of the signal strength.

4.  The digital receiver of claim 3, wherein the predetermined amount is equal to the guard interval.

5.  The digital receiver of claim 3 or 4, wherein the digital receiver comprises a plurality of synchronisers for determining which one of a corresponding plurality of transmission modes has been used to transmit the signal, and wherein the signal meter is coupled to the plurality of synchronisers, and comprises a discriminator arranged to detect whether the synchroniser giving the highest peak value is changing, and wherein when it is changing the signal meter disregards the maximum value for the measure of signal strength.

6.  The digital receiver of any of claims 3 to 5, wherein the signal meter is arranged to discount maximum values that are below a pre-determined threshold.

7.  The digital receiver of any of claims 3 to 6, wherein the peak detector is arranged to output the maximum value of the waveform as a first peak, the next largest value of the waveform as a second peak, and timing information so that the relative timing between the two peaks can be determined, and wherein the signal meter is arranged to reduce the measure of signal strength in dependence on the relative timing.

8.  The digital receiver of claim 7, wherein the signal meter is arranged to define a window of width one guard interval either side of the first peak, and to reduce the signal strength indicated only if the second peak lies outside of the window.

9.  The digital receiver of any preceding claim, wherein the digital receiver comprises a plurality of synchronisers for determining which one of a corresponding plurality of transmission modes has been used for the signal, and wherein the signal meter is coupled to the plurality of synchronisers, and comprises a discriminator arranged to detect whether or not the synchronisers have determined the transmission mode, and the signal meter is arranged to disregard the maximum values received while the mode has not yet been determined.

10. The digital receiver of any preceding claim, wherein the front end comprises a gain circuit for amplifying or reducing the signal, the signal meter being arranged to receive an indication of the gain that is being applied, and compensate the measure of signal strength to reflect the applied gain.

**11.** The digital receiver of claim 10, wherein the gain circuit is a narrow band gain circuit for amplifying or reducing the signal in a particular channel.

**12.** The digital receiver of any of claims 2 to 11, wherein the signal meter comprises an averager, wherein the average is arranged to take a sliding average of the maximum values output by the peak detector, and to provide an averaged output, wherein the signal strength is based on the averaged output.

**13.** The digital receiver of claim 12, wherein if the signal meter disregards the maximum value, the value is not entered into the averager.

**14.** The digital receiver of claim 13, wherein if the signal meter disregards a maximum value, the sliding average is reset.

**15.** The digital receiver of any preceding claim, wherein the digital receiver is a diversity receiver for receiving first and second signals with identical signal content, the receiver comprising:

at least two synchronisers, each adapted to correlate a respective one of the first and second signals;
two signal meters coupled to respective synchronisers, to give respective measures of the first and second signal strength based on output of the synchronisers; and
combining means adapted to combine the respective measures to give a final measure of the signal strength that depends both on the respective strengths of the signals, and the difference in strengths of the signals.

**16.** The digital receiver of claim 15, wherein the digital receiver is arranged to sum the logs of the respective measures.

**17.** The digital receiver of any preceding claim, wherein the indicator comprises one or more of a numerical display, an indicator light, or a graphical display.

**18.** A digital signal detector, comprising:

a front end for receiving a signal;
a synchroniser coupled to the front end, comprising a correlator for correlating the received signal with a delayed version of itself, the delay being selected to correspond to the guard interval of a digital signal transmission mode;
an integrator for receiving the output from the correlator to give a waveform representative of the power of the received signal; and
a peak value detector for outputting the maximum value of the waveform;
an indicator adapted to give an indication of whether or not a digital signal is present based on the output of the peak value detector.

**19.** The digital signal detector of claim 18, wherein the indicator is adapted to give a representation of the strength of any digital signal present

**20.** A method of detecting the strength of a digital signal having symbols comprising a useful symbol part, and a guard interval, comprising:

receiving a signal;
correlating the received signal with a delayed version of itself to give an output indicating the presence of the guard intervals, and the timing of the signal symbols;
integrating the output of the correlating step to give a waveform representative of the power of the received signal;
outputting, in dependence on the waveform, a measure of signal strength.

**21.** The method of claim 20, wherein the outputting step comprises detecting the maximum value of the waveform, wherein the measure of the signal strength is based on the maximum value detected.

**22.** The method of claim 21, wherein the output from the integrating step is a waveform, and wherein the outputting step comprises:

detecting the maximum value of the waveform for each symbol and the relative position of the maximum value within the waveform
detecting whether the relative position of the maximum value for a symbol and that of the maximum value for the preceding symbol differs by more than a predetermined amount, and wherein, if it does, disregarding the maximum value for the measure of signal strength.

23. The method of claim 22, wherein the predetermined amount is equal to the guard interval.

24. The method of any of claims 21, 22 and 23, wherein the correlating step comprises determining which one of a corresponding plurality of transmission modes has been used to transmit the signal, and wherein the maximum values detected are disregarded as long as the mode of transmission has not been detected.

25. The method of any of claims 22 to 24, comprising disregarding maximum values that are below a pre-determined threshold.

26. The method of any of claims 22 to 25, wherein the outputting step comprises:

detecting the maximum value of the waveform as a first peak, and the next largest peak value of the waveform as a second peak;
detecting the relative timing between the two peaks, and
reducing the measure of signal strength in dependence on the relative timing.

27. The method of claim 26, comprising defining a window with a width of one guard interval either side of the first peak, and reducing the measure of signal strength only if the relative timing indicates the second peak lies outside of the window.

28. The method of any of claims 21 to 27, comprising compensating the measure of signal strength on the basis of any gain applied to the signal in the receiving step.

29. The method of claim 28, wherein the gain applied is a narrow band gain for amplifying or reducing the signal in a particular channel.

30. The method of any of claims 21 to 29, wherein the outputting step comprises taking a sliding average of the maximum values, and providing an averaged output, wherein the measured signal strength is based on the averaged output.

31. The method of claim 29, wherein in the averaging step the sliding average does not take into account disregarded maximum values.

32. The method of claim 31, wherein in the averaging step the sliding average is reset when a disregarded maximum value is received.

33. The method of any of claims 20 to 32, wherein the receiving step comprises diversity reception of a signal, receiving first and second signals with identical signal content:

wherein the correlating, integrating and outputting steps are carried out for each of the first and second signal; and also comprising
combining the respective measures of the signal strength to give a representation that depends both on the respective strengths of the signals, and the difference in strengths of the signals.

34. The method of claim 33, wherein the combining step comprises taking the sum of the logs of the respective measures.

35. A digital radio receiver comprising the receiver of any of claims 1 to 17, or the digital signal detector of claim 18 or 19.

Figure 1

Figure 2

Figure 3

Figure 4

Figure 5

Figure 6

40

Low Pass
Filter 42

Variable
Attenuator 44

Fixed Gain 46

ADC 48

Synchroniser 6'

# Figure 7

Figure 8

Figure 9